(19) Europäisches Patentamt
European Patent Office
Office européen des brevets

(11) **EP 2 319 647 B1**

(12) **EUROPEAN PATENT SPECIFICATION**

(45) Date of publication and mention
of the grant of the patent:
**27.05.2015 Bulletin 2015/22**

(51) Int Cl.:
**B23D 61/12** *(2006.01)*

(21) Application number: **09808190.4**

(86) International application number:
**PCT/JP2009/064037**

(22) Date of filing: **07.08.2009**

(87) International publication number:
**WO 2010/021254 (25.02.2010 Gazette 2010/08)**

(54) **SAW BLADE AND MANUFACTURING METHOD THEREOF**

SÄGEBLATT UND VERFAHREN ZU SEINER HERSTELLUNG

LAME DE SCIE ET PROCÉDÉ POUR LA FABRIQUER

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.08.2008 JP 2008211674**

(43) Date of publication of application:
**11.05.2011 Bulletin 2011/19**

(73) Proprietors:
• **AMADA Company, Ltd.**
**Isehara-shi, Kanagawa 259-1116 (JP)**
• **Amada Machine Tools Company, Limited**
**Kanagawa 259-1196 (JP)**

(72) Inventors:
• **KATSUHIKO, Oshibe**
**Kanagawa 259-1196 (JP)**
• **SUSUMU, Tsujimoto**
**Kanagawa 259-1196 (JP)**

(74) Representative: **Grünecker Patent- und Rechtsanwälte**
**PartG mbB**
**Leopoldstraße 4**
**80802 München (DE)**

(56) References cited:
**JP-A- 6 000 716      JP-A- 2001 009 634**
**JP-A- 2003 039 236      JP-A- 2005 349 512**
**JP-U- 64 011 708**

**Description**

TECHNICAL FIELD

The present invention relates to a saw blade, and more specifically to a saw blade which achieves a reduction in cutting resistance, an improvement in chipping resistance, and an improvement in abrasion resistance in a cutting (severing) process of works.

BACKGROUND ART

In general, a saw blade called a bi-metal saw blade is a saw blade in which a blade portion and a body portion are different in material from each other, specifically a saw blade using strong spring steel for the body portion and using a hard material such as cemented carbide, cermets, ceramics or high-speed tool steel for the blade portion. In this industry, the bi-metal saw blade may often indicate a saw blade which uses the high-speed tool steel for the blade portion.

In the same manner as a general cutting bit, a single saw tooth of a saw blade can be defined by a rake angle, a clearance angle, and a tooth angle (an angle formed between a rake surface and a clearance surface) which is an angle of a tooth point. A sum of the rake angle, the clearance angle, and the tooth angle is 90°.

There are various types of saw blades including even saw blades as hand-held tools, such as a hand hacksaw that a person holds for cutting and a hand saw used by a carpenter. Here, saw machines which perform cutting processing by use of power from electric motors will mainly be described.

Saw machines are roughly classified into circular saw machines and band saw machines by shapes of saw blades, and roughly classified into a wood processing type and a metal processing type by usage. Since each kind of the circular saw machines and the band saw machines has the wood processing type and the metal processing type, there are four types in total when classified by shapes of saw blades and usage. A circular saw blade is used in the circular saw machine and a band saw blade is used in the band saw machine.

A major difference between a saw blade used for wood processing and a saw blade used for metal processing lies in a rake angle. The saw blade for wood processing has a large rake angle because cutting quality is considered important for wooden works, and the rake angle is generally about 20° to 30°. Meanwhile, a rake angle of the saw blade for metal processing is generally in a range from about 0° to 15°. In other words, being used for cutting works considerably different in characteristics, the saw blades for wood processing and for metal processing have tooth points in shapes designed under different basic concepts.

Next, a major difference between the circular saw blade and the band saw blade for metal processing will be described.

Blade thicknesses in typical sizes of metal cutting circular saw blades posted on a web page of AMADA MACHINE TOOLS CO., LTD. are 2.0 to 2.7 mm. When attention is drawn to a circular saw blade made of HSS (high-speed steel) presented as a standard circular saw blade product (i.e., a typical example in general), the blade thickness thereof is 2.5 mm. The blade thickness means a width between tooth point end portions that is equivalent to a kerf width, and a saw thickness being a thickness of a body of the circular saw is generally about 85%, i.e., about 2.5x0.85= 2.1 mm.

A circular saw machine in which this circular saw blade is used is a circular saw machine called CM-400. This circular saw machine CM-400 is presented on the above-mentioned web page of AMADA MACHINE TOOLS CO., LTD. Maximum diameters of works that can be cut with the CM-400 are described as a diameter of 60 mm for a solid material and a diameter of 90 mm for a pipe. In short, the circular saw blade with a saw thickness of about 2.1 mm cuts works having a diameter of 90 mm or less.

Band thicknesses of a product called SGLB, which is described as a best-seller blade (i.e., a typical example in general) of a metal cutting saw blade also presented on the web page of AMADA MACHINE TOOLS CO., LTD. are 0.9 to 1.6 mm. The band thicknesses do not mean dimensions equivalent to the kerf widths, but are equivalent to the saw thicknesses of the above-mentioned circular saw blades.

Moreover, when band saw machines in which these band saw blades are used are searched for on the above-mentioned web pages of AMADA MACHINE TOOLS CO., LTD. , there is posted a product called HA-250 which is the band saw machine of the smallest size. The band thickness of the band saw blade used in this HA-250 is 0.9 mm and a maximum diameter of a work that can be cut is a diameter of 250 mm.

The above description is summarized as follows:

Circular saw blade: Saw thickness 2.1 mm, the maximum cuttable work diameter 90 mm; and
Band saw blade: Band thickness 0.9 mm, the maximum cuttable work diameter 250 mm.

Hence it is apparent that the thickness of the body of the saw blade for supporting the tooth point of the band saw blade is about a half of that of the circular saw blade. This means that rigidity against the cutting resistance is significantly small and strength of the tooth point is small in the case of the band saw blade in comparison with the circular saw blade. Moreover, the circular saw blade having more rigidity than the band saw blade is used to cut works smaller in size than in the case of the band saw blade. Accordingly, the circular saw machine has a far superior cutting performance with a small-diameter material having a diameter of 90 mm or less, and hence the circular saw blade used therein is designed based on a totally different concept from that of the band saw blade.

The metal cutting circular saw blade has the large saw thickness and is therefore able to withstand the large cutting resistance. Hence it is possible to increase an incision per tooth. The tooth point has a large tooth angle around 75° in order to withstand the large incision. The metal cutting circular saw blades also have a small rake angle of 10° or less in general, and some are even provided with a negative rake angle. That is, the metal cutting circular saw blade has rigid tooth points and high chipping resistance but has poor cutting performance. However, the poor cutting performance is compensated by performing forcible incision with the circular saw machine taking advantage of the high rigidity of the body of the circular saw blade. There is no example of band saw blades which practically use the above cutting method. The basic design concepts are different between the circular saw blade and the band saw blade, and the band saw blade is bent with two wheels and is twisted with two inserts so that the tooth points are directed to works. Accordingly, there is a limitation to increase rigidity of the body of the band saw blade.

Moreover, among the metal cutting band saw blades, practically used bi-metal band saw blades, in particular, are classified by material of the blade portion into two types, specifically, one using the high-speed tool steel and the other using cemented carbide containing tungsten carbide as a main component. In general, cemented carbide is very hard but very brittle. Thus, the cemented carbide easily causes chipping and it is difficult to form sharp tooth point edges. The same applies to the case of the band saw blade. The metal cutting band saw blade using cemented carbide has a large tooth angle while having a rake angle of 10° or less.

The following shows specific investigations of the rake angles and the tooth angles of the general metal cutting band saw blades.

Concerning the following reference documents, patent applications considered to include examples of the metal cutting band saw blades that use the high-speed tool steel (HSS, also referred to as the high-speed steel) for the tooth points will be employed as reference.

First of all, USP 4,292,871 was filed on February 1, 1979.

General angles of a regular blade are described therein, namely, the tooth angle in a range from 54° to 55° and the clearance angle in a range from 35° to 36°. The regular blade is explained as one having the rake angle of 0° (see Lines 50 to 65 in Section 1).

Specifically, (1) the rake angle is 0° and the tooth angle is in a range from 54° to 55°. Note that the band saw blade having the rake angle of 0° is also in use today.

In the same specification of USP 4,292,871, there is also description of a typical hook blade (a positive rake angle) having (2) the rake angle in a range from 5° to 10°, the tooth angle in a range from 50° to 51°, and the clearance angle of 30° or more.

Next, Japanese Patent Application Laid-Open No. Hei 8 (1996)-174334 is an application which claims the priority date of September 27, 1994.

In this specification, there is description of the conventional saw blade having (3) the rake angle of 10°, the tooth angle of 48°, and the clearance angle of 32° (see Paragraphs 0010 to 0017).

In addition, Japanese Patent Application Laid-Open No. 2005-118949 was filed on October 17, 2003.

Here, there is description of the general saw blade, having the rake angle of 10°± 5° and the clearance angle of 30°±10° (see Paragraph 0008). In this case, the rake angle in a range from 5° to 15° while the clearance angle in a range from 20° to 40°. However, it is usually considered that the clearance angle is 40° when the rake angle is 5°, and the clearance is 20° when the rake angle is 15°. Thus, the tooth angle is generally considered to be in a range from 90°-5°-40°= 45° to 90°-15°-20°=55°.

Specifically, (4) the rake angle is in a range from 5° to 15°, and the tooth angle is in a range from 45° to 55°.

As described above, the general rake angle and the general tooth angle of the metal cutting band saw blades have not changed very much since 1979 until today. Based on the highest and the lowest values mentioned above, the rake angle is in a range from about 0° to 15° while the tooth angle is in a range from about 45° to 55°. In particular, the reason why the rake angle does not exceed 15° is that tooth cutting machines for the metal cutting band saw blades have such specifications that the rake angle does not exceed 15°. Reference will be made to these values when there is no description for the rake angle or the tooth angle in precedent examples of particular inventions described below.

The particular precedent examples, i.e., past study cases will be examined below.

In the specification of USP 4,292,871, there is description in which (5) the rake angle is in a range from 4° to 7°, the tooth angle is in a range from 53° to 61 °, and the clearance angle is in a range from 25° to 31° ° (see Line 35 in Section 3).

The above-mentioned Japanese Patent Application Laid-Open No. Hei 8 (1996)-174334 describes a tooth having a large tooth angle, namely, (6) the rake angle is in a range from 7° to 10°, the tooth angle is in a range from 55° to 68°, and the clearance angle is in a range from 15° to 30°, and describes a saw blade, specifically used in an experiment, having (7) the rake angle of 7.5°, the tooth angle of 59.5°, and the clearance angle of 23° (see Paragraphs 0010 to 0017).

Japanese Patent Application Laid-Open No. 2005-349512, filed on June 9, 2004, is considered to be the closest prior art and includes description in which a rake angle is 10° and a back angle is 70° (see Paragraph 0018). The back angle is a value of a sum of the tooth angle and the rake angle, and the tooth angle is calculated as 70°-10°= 60°. In other words, (8) the rake angle is 10°, and the tooth angle is 60°.

USP 5,018,421 was filed on April 7, 1988 and includes description in which (9) the rake angle is in a range from 7° to 12.5°, and the tooth angle is in a range from 61° to 64° (see Lines 35 and 40 in Section 2). Moreover, there is description of a saw blade, used in the experiments of this document, having (10) the rake angle of 7.5°, and the tooth angle of 62.5° (see Table 1).

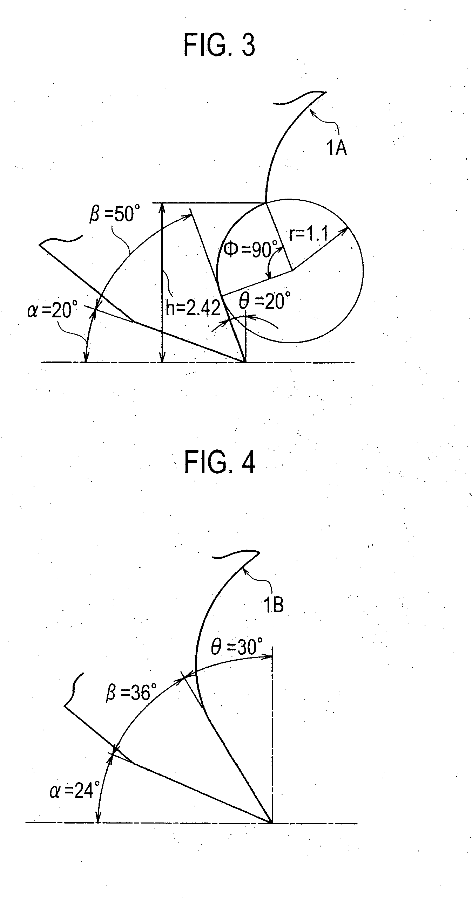

Japanese Patent Application Laid-Open No. Hei 6 (1994)-716 was filed on June 18, 1992 and includes description in which the clearance angle is 32.5°, and the rake angle is 9° (see Fig. 3). To put it differently, (11) the rake angle is 9°, and the tooth angle is 48.5°.

Japanese Patent Application Laid-Open No. Hei 11 (1999)-19821 is an application which claims the priority date of May 8, 1997.

This application discloses that the clearance angle is preferably in a range from 15° to 45° and more preferably in a range from 20° to 35°, in particular. The application also discloses that, if the clearance angle becomes 45° or more, a cutting performance on a work is improved whereas tooth points may become acute to have lower rigidity, and may abrade more easily. Hence, it is considered that the rake angle is 0° and the tooth angle is 45° when the clearance angle is 45°.

On the other hand, the application discloses that, if the clearance angle becomes 15° or less, the rigidity may be improved whereas the cutting performance tends to be reduced (see Paragraph 0036). Although there is no description concerning the rake angle or the tooth angle when the clearance angle is 15°, the tooth angle is estimated as 90°-15°-15°= 60° assuming that the maximum value of the rake angle of the above-mentioned general metal cutting band saw blade is 15°. In other words, it is estimated that (12) the rake angle is in a range from 0° to 15°, and the tooth angle is in a range from 45° to 60°.

Japanese Patent Application Laid-Open No. Hei 11 (1999)-147201 is an application which claims the priority date of September 8, 1997.

This application discloses a saw blade having a rake angle increased by means of plastic deformation, and also includes description of the rake angle in a range from 5° to 30° (see Claim 3).

Although there is no description concerning the tooth angle, the tooth angle is considered in a range from 45° to 55° of the above-mentioned general metal cutting band saw blade in this case. To put it another way, it is estimated that (13) the rake angle is in a range from 5° to 30°, and the tooth angle is in a range from 45° to 55°

Japanese Patent Application Laid-Open No. Hei 11 (1999)-28615 was filed on May 15, 1998 (see Paragraph 0039).

Assuming that the rake angle is constant, clearance angles $\alpha$A: from 30° to 40°, $\alpha$B: from 27° to 40°, $\alpha$C: from 20° to 35°; assuming that the clearance angle is constant, rake angles $\theta$A: from 4° to 15°, $\theta$B: from 3° to 13°, $\theta$C: from 0° to 11°; and regardless of the rake angle and the clearance angle, clearance angles $\beta$A: from 40° to 50°, $\beta$B: from 40° to 55°, $\beta$C: from 45° to 75°.

In this way, the application individually describes the angles of the tooth point but does not clarify the relationship between the rake angle and the tooth angle. However, it is apparent that at least studies have been conducted on the rake angle in a range from 0° to 15° and on the tooth angle in a range from 40° to 75°.

However, a combination of the rake angle of 15° and the tooth angle of 75° is not practical, because the clearance angle is 0° in this case. Here, it makes sense that the tooth angle is 60° when the rake angle is 15°, considering that the clearance angle needs to be around 15° as disclosed in the above-mentioned Japanese Patent Application Laid-Open No. Hei 11 (1999)-19821. That is, in consideration of the combinations, the ranges of the studies of this document are considered such that (14) the rake angle is in a range from 0° to 15° and the tooth angle is in a range from 40° to 75°, and the minimum clearance angle is 15°.

Japanese Patent No. 3870158 is an application which claims the priority date of July 18, 2000. In this application, there is description in which (15) the rake angle is in a range from 5° to 10° (8° in the drawing), the tooth angle is in a range from 45° to 65° (55° in the drawing), and the clearance angle is in a range from 20° to 35° (27° in the drawing) (see Paragraphs 0015 to 0020).

The numerical values quoted in the description of these patent applications are summarized as follows.

(1) The rake angle is 0°, and the tooth angle is in a range from 54° to 55° (the clearance angle is in a range from 35° to 36°);

(2) the rake angle is in a range from 5° to 10°, and the tooth angle is in a range from 50° to 51° (the clearance angle is in a range from 29° to 35°);

(3) the rake angle is 10°, and the tooth angle is 48° (the clearance angle is 32°);

(4) the rake angle is in a range from 5° to 15°, and the tooth angle is in a range from 45° to 55° (the clearance angle is in a range from 20° to 40°);

(5) the rake angle is in a range from 4° to 7°, and the tooth angle is in a range from 53° to 61° (the clearance angle is in a range from 22° to 33°);

(6) the rake angle is in a range from 7° to 10°, and the tooth angle is in a range from 55° to 68° (the clearance angle is in a range from 12° to 28°);

(7) the rake angle is 7.5°, and the tooth angle is 59.5° (the clearance angle is 23°);

(8) the rake angle is 10°, and the tooth angle is 60° (the clearance angle is 20°);

(9) the rake angle is in a range from 7° to 12.5°, and the tooth angle is in a range from 61 ° to 64° (the clearance angle is in a range from 13.5° to 22°);

(10) the rake angle is 7.5°, and the tooth angle is 62.5° (the clearance angle is 20°);

(11) the rake angle is 9°, and the tooth angle is 48.5° (the clearance angle is 32.5°);

(12) the rake angle is in a range from 0° to 15°, and the tooth angle is in a range from 45° to 60° (the clearance angle is in a range from 15° to 45°);

(13) the rake angle is in a range from 5° to 30°, and the tooth angle is in a range from 45° to 55° (the clearance angle is in a range from 5° to 40°);

(14) the rake angle is in a range from 0° to 15° and the tooth angle is in a range from 40° to 75°, and the minimum clearance angle is 15° (the clearance angle is in a range from 15° to 50°); and

(15) the rake angle is in a range from 5° to 10°, the tooth angle is in a range from 45° to 65° (the clearance angle is in a range from 15° to 40°).

Among these examples, the example (6) includes the range where the clearance angle is too small. Nevertheless, the ranges shown in the three examples of (6), (13), and (14) encompass all other examples. It is to be noted that the clearance angles shown in parentheses from the examples (1) to (15) are calculated values and may therefore be slightly different from the values described in the corresponding documents due to calculation methods.

The band saw blade is greatly superior in cutting steel to the circular saw blade, because having a capability of cutting a work having large dimensions. However, the band saw blade is less rigid than the circular saw blade and therefore has a smaller cutting area per unit time. Further, time for making a single cut in a work is longer because the work to be cut is larger than in the case of the circular saw blade.

In recent years, in the steel sales industry, there has been a growing demand for shorter delivery periods and a demand for shortening cutting time in cutting with the band saw blades.

If high-speed cutting is carried out with a conventional band saw blade, the cutting resistance increases so much that cut deviation or chipping easily occurs because the body of the saw blade is not rigid. Hence, reduction in the cutting resistance is a concern to be addressed.

Moreover, high-speed cutting carried out with the conventional band saw blade also causes a problem that gullets are filled and clogged with chips whereby a cut surface becomes coarse.

The saw blade disclosed in the above-mentioned Patent Document 4 is configured to discharge chips smoothly while causing no chipping with a tooth point having no reinforced portion.

As described previously, this saw blade is configured to have the rake angle of 10° and the tooth angle of 60°. Here, the rake angle is particularly small and the cutting resistance in high-speed cutting is not sufficiently reduced.

Moreover, a rake surface has a shape like a chip curler but, judging from the content of the specification, is not configured to make chips compact. Hence the gullets are filled and clogged with the chips when high-speed cutting is carried out whereby the cut surface becomes coarse.

Meanwhile, the saw blade disclosed in the above-mentioned Patent Document 6 is configured to efficiently generate curled chips, which is a typical band saw blade with a chip curler provided on a tooth point.

When carrying out high-speed cutting, this band saw blade exerts an effect against clogging by making the chips compact. However, as described previously, the saw blade is configured to have the rake angle of 9° and the tooth angle of 48.5°. Hence the rake angle is particularly small and the cutting resistance in high-speed cutting is not sufficiently reduced.

In addition, the chip curler does not exert an effective function unless having a shape set corresponding to a pitch of the tooth points. However, this point has not been disclosed at all and the chips are made compact insufficiently depending on the pitch of the tooth points.

Meanwhile, the saw blade proposed in the above-mentioned Patent Document 10 is configured to increase a length dimension of a bi-metal boundary portion, i.e., a portion where the blade and the body are welded together so as to enhance strength against chipping.

Although a portion of a rake surface is formed into a shape like a chip curler, no description for making chips compact is found in the contents of the specification and an effect is therefore unknown.

As described previously, this is configured to have the rake angle of 5° to 10° and the tooth angle of 45° to 65°. Here, the rake angle is particularly small and the cutting resistance in high-speed cutting is not sufficiently reduced.

Further, the configuration of saw teeth in the saw blade disclosed in the above-mentioned Patent Document 8 is described as having the rake angle in a range from 5° to 30°(see Claim 3) but is not described as for the tooth angle. However, the tooth angle is considered to be the tooth angle in a range from 45° to 55° of the general metal cutting band saw blade in this case.

The range of the rake angle from 5° to 30° is a wide range including general values and large values. Although the angles seem to vary depending on the tooth levels, the specification shows an example in which the rake angle of the guide tooth is 15°, and the continuous teeth of the first pair have 17°, ...19°, ...21° (Paragraph 0008). These values are greater than general values and the cutting resistance in high-speed cutting with such a band saw blade is expected to be relatively reduced. However, this band saw blade does not take any countermeasure for reducing the clogged chips. Therefore, when high-speed cutting is carried out, the gullets are filled and clogged with the chips whereby the cut surface becomes coarse.

Moreover, after a tooth cutting process, plastic deformation is carried out by use of a tool called an upsetting tool (Paragraph 0022) so as to increase the rake angle.

In other words, a secondary process is executed after the tooth cutting process, thereby causing a cost increase.

Furthermore, a grinding process is executed after a heat process in order to form inclinations on the guide teeth, thereby causing a further cost increase.

As described above, the saw blade disclosed in Patent Document 8 not only has a problem of causing the coarse cut surface but also has a problem of causing cost increases. Therefore it is necessary to improve a cutting performance and to achieve reduction in manufacturing costs at the same time.

The tooth angle has been estimated to be in a range from 45° to 55° above. However, it is doubtful whether it is appropriate to estimate the range of the tooth angle from 45° to 55° because the saw blade has special characteristics different from the general band saw blades, such as having the tooth points subjected by plastic working and the guide tooth provided with an inclination by the grinding process.

It is to be noted that this specification discloses that "able to have the rake angle of about 10° after serration" (Paragraph 0008) and that "the rake angle in this case cannot be manufactured by use of a milling cutter" (Paragraph 0023). This description implies that the rake angle of the band saw blade obtainable by use of a general serration machine (a milling machine) is 10°.

Moreover, the maximum rake angle obtainable by this serration machine is estimated to be 10°, based on the description in which "it is meaningful to subject the guide tooth, able to have the rake angle of about 10° after serration, to plastic working so as to make the rake angle have about 15°" (Paragraph 0008).

The serration machine which achieves the maximum rake angle of 10° implies an old-type machine because today's machines can obtain around 15°. This description also supports the fact that the angle does not generally exceed 15° under the specification of the serration machine.

In summary, the conventional saw blades have been developed without mutually correlating three factors, namely, chipping resistance, an effect of reduction in cutting resistance, and abrasion resistance.

PRIOR ART DOCUMENTS

Patent Documents

Patent Document 1: United States Patent No. USP 4292871
Patent Document 2: Japanese Patent Application Laid-Open No. Hei 8 (1996)-174334
Patent Document 3: Japanese Patent Application Laid-Open No. 2005-118949
Patent Document 4: Japanese Patent Application Laid-Open No. 2005-349512
Patent Document 5: United States Patent No. USP 5018421
Patent Document 6: Japanese Patent Application Laid-Open No. Hei 6 (1994)-716
Patent Document 7: Japanese Patent Application Laid-Open No. Hei 11 (1999)-19821
Patent Document 8: Japanese Patent Application Laid-Open No. Hei 11 (1999)-147201
Patent Document 9: Japanese Patent Application Laid-Open No. Hei 11 (1999)-28615
Patent Document 10: Japanese Patent No. 3870158

DISCLOSURE OF THE INVENTION

Technical Problem

This invention has been made to solve the above-described problems. Accordingly, an object thereof is to provide a saw blade which achieves an improvement in chipping resistance, a reduction in cutting resistance, and an improvement in abrasion resistance of saw teeth of the saw blade, and which achieves suppression of clogging of chips inside gullets.

Technical Solution

In order to achieve the above object, the present invention provides a saw blade comprising: a plurality of saw teeth each including a rake surface, a rake angle $\theta$, a tooth angle $\beta$, and a clearance angle $\alpha$, wherein $17° \leq \theta \leq 40°$, $35° \leq \beta \leq 58°$, and $15° < \alpha$, a sum of the rake angle 0, the tooth angle $\beta$, and the clearance angle $\alpha$ is 90°, a radius r of an arc-shaped chip curler portion being in contact with the rake surface of each of the saw teeth is in a range within 10% $\pm$ 4% of any of a saw tooth pitch and an average saw tooth pitch of the saw blade, a fan angle $\phi$ of the chip curler portion is in a range within 85° $\pm$ 20°, and a dimension h from an intersection portion of the chip curler portion and a gullet forming surface extending from a tooth bottom side of each of the saw teeth, to a tooth point of each of the saw teeth is in a range within $(2r\times1.1) \pm 0.2(2r\times1.1)$.

Preferably the plurality of saw teeth provided on the saw blade have a difference in height.

Preferably the tooth points of the saw teeth are coated with hard coating.

Preferably the saw teeth are kept in a state just after a tooth cutting process.

The present invention also provides a method of manufacturing a saw blade, comprising the steps of: performing a tooth cutting process of saw teeth, each of the saw teeth satisfying $17° \leq \theta \leq 40°$, $35° \leq \beta \leq 58°$, $15° < \alpha$, and $\theta+\beta+\alpha= 90°$ where $\theta$ is a rake angle, $\beta$ is a tooth angle, and $\alpha$ is a clearance angle, a radius r of an arc-shaped chip curler portion in contact with a rake surface of each of the saw teeth being in a range within 10% $\pm$ 4% of any of a saw tooth pitch and an average saw tooth pitch of the saw blade, a fan angle $\phi$ of the chip curler portion being in a range within 85° $\pm$ 20°, and a dimension h from an intersection portion of the chip curler portion and a gullet forming surface extending from a tooth bottom side of each of the saw teeth, to a tooth point of each of the saw teeth being in a range within $(2rx1.1) \pm 0.2(2r\times1.1)$, and setting right and left set teeth while keeping the rake angle $\theta$, the tooth angle $\beta$, and the clearance angle $\alpha$ unchanged.

Advantageous Effects

According to the present invention, the rake angle, the tooth angle, the clearance angle, the radius of the chip curler portion, the fan angle of the chip curler portion, and the dimension from the intersection portion of the chip curler portion and the gullet forming surface to the tooth point of the saw tooth in the saw blade are set to appropriate values. Thus, it is possible to achieve a reduction in cutting resistance, an improvement in chipping resistance, and an improvement in abrasion resistance of saw teeth as well as to prevent occurrence of clogging of chips inside gullets.

BRIEF DESCRIPTION OF THE DRAWINGS

[Fig. 1] Figs. 1(a) to 1(d) are explanatory views conceptually and schematically showing a band saw blade according to an embodiment of the present invention.

[Fig. 2] Figs. 2(a) to 2(d) are explanatory views showing dimensions of respective constituents at the time of actual production of the band saw blade according to the embodiment of the present invention.

[Fig. 3] Fig. 3 is an explanatory view showing a configuration of a saw tooth in a band saw blade according to a second embodiment.

[Fig. 4] Fig. 4 is an explanatory view showing a configuration of a saw blade as a comparative example.

[Fig. 5] Fig. 5 is an explanatory view showing a configuration of a typical conventional saw tooth as a comparative example.

[Fig. 6] Fig. 6 is an explanatory view showing results of experiments of cutting works.

[Fig. 7] Figs. 7(a) and 7(b) are explanatory views of magnitudes of irregularities on cut surfaces of works by using the band saw blades.

[Fig. 8] Fig. 8 is an explanatory view of results of experiments showing relationships of a rake angle, a tooth angle, and a clearance angle of the saw blade with chipping resistance, abrasion resistance, and cutting resistance.

[Fig. 9] Figs. 9(a) to 9(d) are explanatory view showing a band saw blade according to still another embodiment.

BEST MODES FOR CARRYING OUT THE INVENTION

Embodiments of the present invention will be described below by using the drawings.

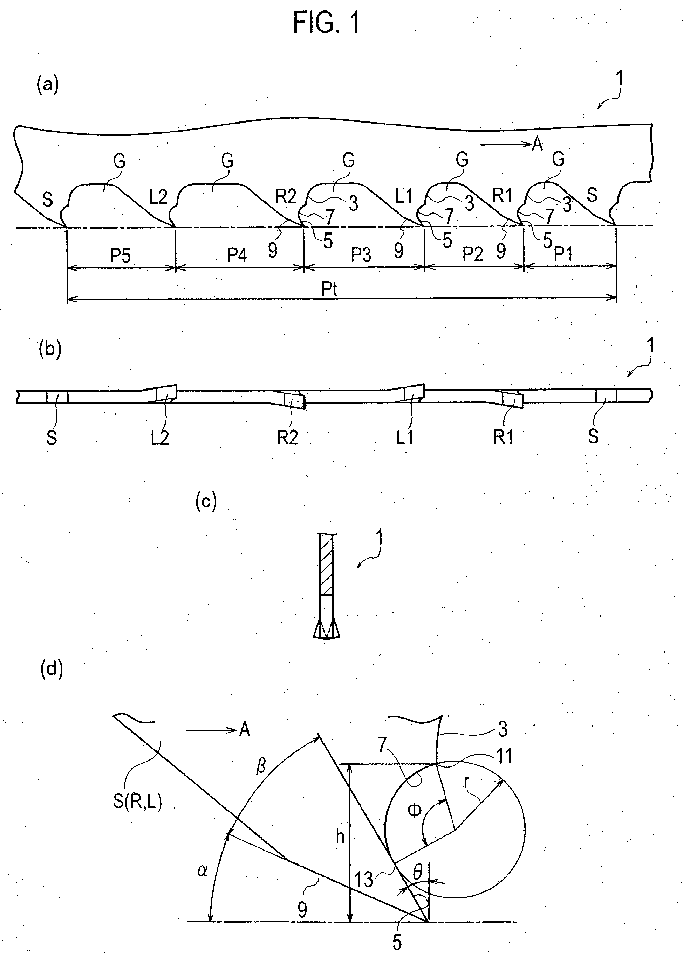

Fig. 1 conceptually and schematically shows a band saw blade 1 according to an embodiment of the present invention.
As similar to a general band saw blade, the band saw blade 1 includes a straight tooth S which is not provided with setting in a right-to-left direction viewed from a traveling direction (a direction of an arrow A) of the band saw blade 1, multiple right set teeth R1 and R2 provided with rightward setting, and multiple left set teeth L1 and L2 provided with leftward setting, collectively as one group.
It is to be noted that the number of the straight teeth S in one group, and the numbers of the right and left set teeth R and L therein are arbitrary, and that the order of layout of the straight teeth S and the right and left set teeth R and L are arbitrary. Moreover, pitches P1 to P5 among the straight teeth S and the right and left set teeth R and L are arbitrary and may be defined as equal pitches or mutually different pitches. Further, tooth height dimensions of the straight tooth S and the right and left set teeth R and L in each group are also arbitrary. In addition, set amounts in the right-to-left direction of the multiple right and left set teeth R and L in each group are arbitrary.
The band saw blade 1 is processed in accordance with an appropriate processing method such as a press cutting process, a milling process, a grounding process or a laser cutting process, whereby the straight teeth S and the right and left set teeth R and L are respectively subjected to a tooth cutting process into substantially the same shape. Moreover, after undergoing the tooth cutting process, the right and left set teeth R and L are subjected only to a setting process in the right-to-left direction without adding a secondary process such as a hammering process for modifying (deforming) the shapes of the right and left set teeth R and L.
A gullet G is formed on a front side in a traveling direction A of each of the straight teeth S and the right and left set teeth R and L. A chip curler portion 7 in an arc shape for curling chips, which are continuously generated when subjecting a work (not shown) to a cutting process, is formed between a gullet forming surface 3 configured to form the gullet G and a rake surface 5 provided on a tooth point of each of saw teeth (S, R, and L). Moreover, a clearance surface 9 is formed on the tooth point of each of the saw teeth (S, R, and L).
As shown in Fig. 1 (d), the rake angle of each of the saw teeth (S, R, and L) is $\theta$ and the clearance angle thereof is $\alpha$. Moreover, a tooth angle to be defined between the rake surface 5 and the clearance surface 9 is $\beta$. Therefore, a sum of the rake angle $\theta$, the clearance angle $\alpha$, and the tooth angle $\beta$ is 90°. Meanwhile, in the saw teeth (S, R, and L), the arc-shaped chip curler portion 7 is configured to have an arc surface adjacent to the rake surface 5. A radius of the chip curler portion 7 is r, and a fan angle from an intersection portion 11 of the arc surface and the gullet forming surface 3 to a contact portion 13 of the rake surface 5 is $\phi$. Moreover, a height dimension from the intersection portion 11 to the tooth point (a tip end portion) of the saw tooth is h.
Here, the height dimension h is set in a range within $(2r \times 1:1) \pm 0.2(2r \times 1.1)$ in relation to the radius r of the chip curler portion 7. Specifically, a chip generated at the time of cutting (severing) the work is guided by an arc portion, which is defined by the radius r of the chip curler portion 7 and the fan angle $\phi$, and is then curled. Thereafter, as the chip rotates one revolution at the chip curler portion 7, a diameter thereof becomes 2r. Therefore, the height dimension h is desirably 2r or more considering that the chips being continuously generated are curled by the chip curler portion 7. Here, the height dimension h is configured to define a height position of the chip curler portion 7 from the tooth point of the saw tooth.
If the height dimension h is too small, the chip curler portion 7 may fail to curl the chips and the chip curler portion 7 may generate clogs. On the other hand, if the height dimension h is too large, a distance from the tooth point of the saw tooth to the chip curler portion 7 is elongated whereby the chip continuously generated at the time of cutting reduces the temperature before reaching the chip curler portion 7 and being curled sufficiently. Hence it is difficult to curl the chip sufficiently.
Accordingly, the height dimension h is desirably set in a range within $(2r \times 1.1) \pm 0.2(2r \times 1.1)$ in relation to the radius r of the chip curler portion 7.
As described previously, the chip generated when cutting the work is subjected to curling by the chip curler portion 7 and a length of the chip thus generated has a length almost equal to the dimension of the pitch P on the front side of the saw tooth (S, R or L). Hence the radius r of the chipper curler portion 7 is the dimension corresponding to the pitch P on the front side of the saw tooth. Specifically, in the case of the saw blade 1 shown in Fig. 1, the dimension is set to $(P1 \times 0.1 \pm P1 \times 0.04)$ in the case of the right set tooth R1 or to $(P2 \times 0.1 \pm P2 \times 0.04)$ in the case of the left set tooth L1, for example.
It is to be noted that the lengths of the chips generated in one group do not vary widely. Accordingly, it is also possible to use a value of an average pitch obtained by dividing pitches Pt in one group by the number of teeth in one group instead of the above-mentioned pitches P1, P2, and so forth. As described above, when the radius r of the chip curler portion 7 is set up by use of the value of the average pitch, the radii r of the chip curler portions 7 of the saw teeth (S, R, and L) become equal to each other and it is therefore easier to process the saw teeth (S, R, and L).

Meanwhile, if the radius r of the chip curler portion 7 becomes smaller than (P×0.1 - P×0.04), there is a problem of the chips being filled and causing clogs because the radius r and the dimension h corresponding thereto are smaller than the length of the chip corresponding to the pitch. If the radius r is greater than (P×0.1 + P×0.04), there is a problem that the temperature is reduced before the chip is sufficiently curled because of the increase in the dimension h corresponding to the radius r whereby the long-drawn chip is generated without being sufficiently curled and the chip gets clogged between a kerf and a body of a saw blade and causes irregularities on a cut surface. Hence the radius r of the chip curler portion 7 is desirably set in a range within (P 1×0.1 ±P1×0.04).

In addition, the fan angle ϕ of the chip curler portion 7 is set to 85° ± 20°. Specifically, the chips shaved off by the tooth point of the saw tooth when cutting the work continuously flow to the chip curler portion 7 along the rake surface 5 and a curvature of an end portion for rolling the chip is determined by the chip curler portion 7 in relation to the radius r and the fan angle ϕ. Here, if the fan angle ϕ is smaller than (85° - 20°), there is a problem as similar to the above case that it is not possible to curl sufficiently and the irregularities are generated on the cut surface. Meanwhile, if the fan angle ϕ is greater than (85° + 20°), there is a problem that the chip remains only inside the fan shape whereby an effective gullet is reduced and the clog is generated as a consequence. Hence the fan angle ϕ is desirably set in a range within 85° ± 20°.

As it is understood from the description above, in order to achieve compact curling of the chip generated at the time of the cutting process on the work by using the saw blade 1, the radius r and the fan angle ϕ of the chip curler portion 7 are desirably set so as to correspond to the dimension of the pitch (or the average pitch) P of the tooth point of the saw blade, and the height dimension h of the tooth point is desirably set so as to correspond to the radius r.

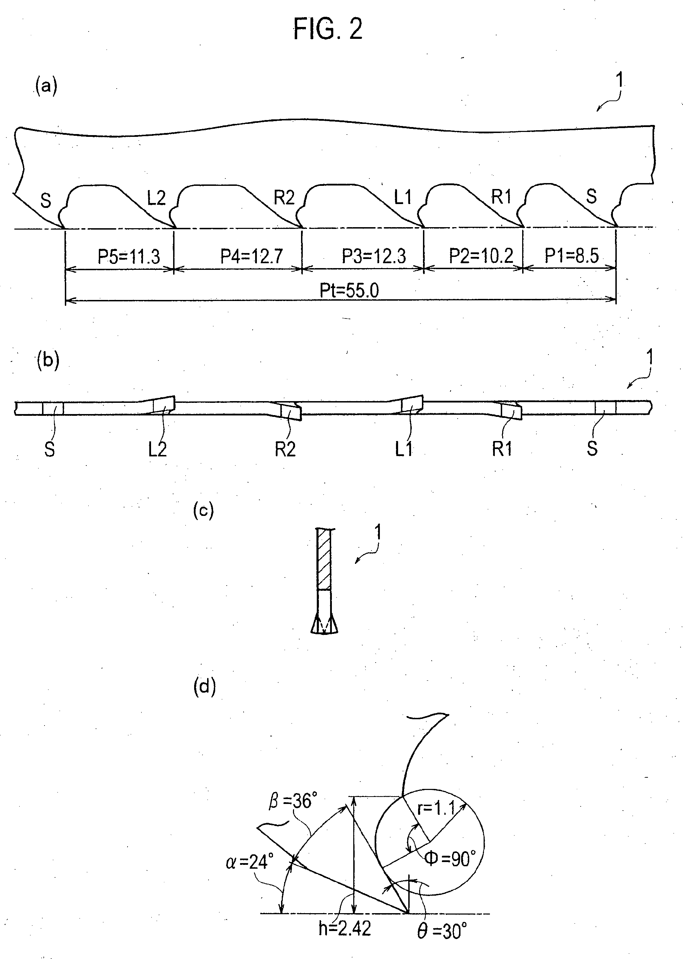

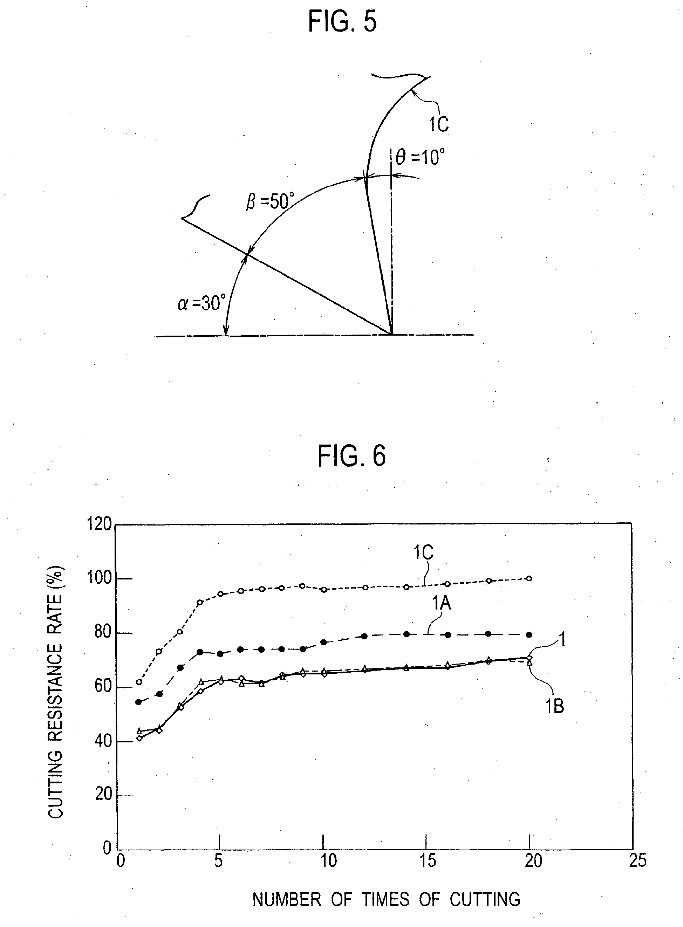

In consideration of the above-described setting conditions, the saw blade 1 having P1= 8.5 mm, P2= 10.2 mm, P3= 12.3 mm, P4= 12.7 mm, P5= 11.3 mm, θ= 30°, α= 24°, β= 36°, ϕ=90°, h= 2.42 mm, and r= 1.1 mm is produced as shown in Fig. 2. Then, a band saw blade 1A having the dimensions of the pitches P1 to P5 of the saw teeth respectively equal to the pitches P1 to P5 of the saw blade 1, the rake angle 8 of the saw teeth = 20°, the clearance angle α= 20°, the tooth angle β= 50°, the height dimension h= 2.42 mm, the radius r= 1.1 mm, and the fan angle ϕ= 90° is produced as shown in Fig. 3. For the purpose of comparison, a band saw blade 1B having the rake angle θ of the saw teeth = 30°, the clearance angle α= 24°, and the tooth angle β= 36° is produced as shown in Fig. 4 while setting the pitches P1 to P5 of the saw teeth equal thereto similarly and omitting the chip curler portion 7, and a band saw blade 1C having the rake angle θ = 10°, the clearance angle α= 30°, and the tooth angle β= 50° is produced as shown in Fig. 5 as a typical conventional band saw blade.

Then, cutting experiments are carried out by using the four types of the band saw blades 1, 1 A, 1B, and 1 C. A band saw machine used therein is HA-400 made of Amada Co., Ltd. and a work is JIS SKD61 with a diameter of 252 mm. As for cutting conditions, a rotating speed of the band saw blades is 40 m/min and a cutting rate thereof is 40 cm$^2$/min. When the work is cut 20 times in accordance with the above-described conditions, values of the respective band saw blades 1, 1A, and 1B when cutting resistance of the conventional band saw blade 1C after cutting 20 times is defined as 100% are shown in Fig. 6.

As apparent from Fig. 6, when comparing the respective band saw blades 1, 1A, 1B, and 1C after cutting 20 times, the cutting resistance of the band saw blade 1A is reduced by 20% whereas the cutting resistance of each of the band saw blades 1 and 1B is reduced by 30%. That is, the rake angle θ of the saw teeth on the conventional blade 1C is 10°, which is smaller than the rake angles θ of the saw teeth on the rest of the band saw blades 1, 1A, and 1B. Accordingly, the conventional band saw blade 1C has the large cutting resistance in the traveling direction (a direction of a main component force) of the band saw blade. Moreover, the rake angle 0 of the saw teeth on each of the band saw blades 1 and 1B is 30°, which is greater than the rake angle θ = 20° of the saw teeth on the band saw blade 1A. Therefore, the cutting resistance of each of the band saw blades 1 and 1B is smaller than the cutting resistance of the band saw blade 1A. In addition, the rake angles θ of the saw teeth on both of the band saw blades 1 and 1B are 30° and are mutually equal. Therefore, reduction rates of the cutting resistance are almost equal.

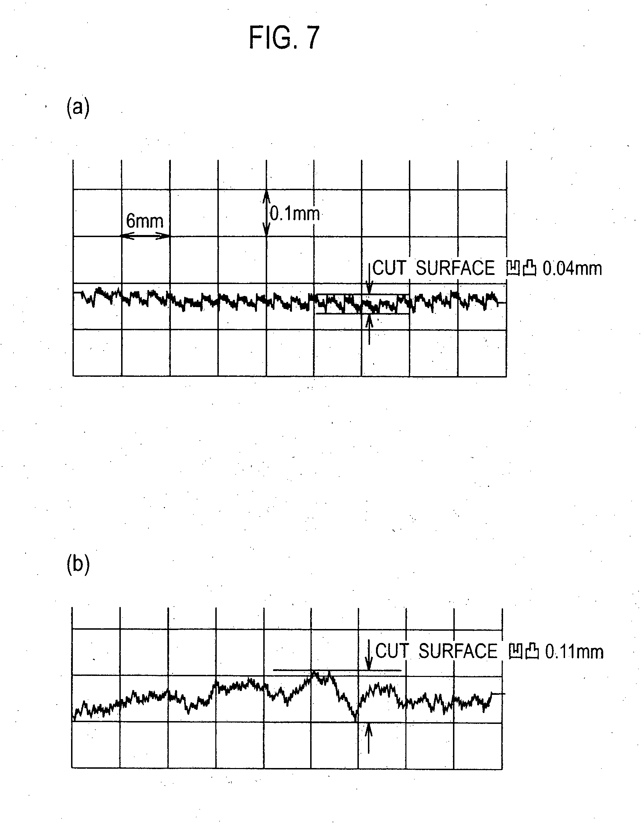

A difference in the configuration between the band saw blades 1 and 1B is the presence or absence of the chip curler portions 7. Accordingly, irregularities on the cut surfaces obtained by cutting the same work under the same conditions by using the band saw blade 1 and the band saw blade 1B described above are measured. Results are obtained as shown in Figs. 7(a) and 7(b). Specifically, the irregularities on the cut surface (irregular shapes for about 50 mm) in a cutting direction of the saw blade (a perpendicular direction to the traveling direction of the saw blade in the vicinity of a central part of the work) obtained by the band saw blade 1 are within 0.04 mm, while the irregularities on the cut surface obtained by the band saw blade 1 B are within 0.11 mm. That is to say, it is found out that the irregularities on the cut surface can be reduced by providing the saw teeth on the band saw blade with the chip curler portions 7.

In other words, the cutting resistance becomes smaller as the rake angle θ of the saw teeth on the saw blade is greater. Moreover, irregularities on the cut surface of the work can be suppressed by providing the chip curler portion 7 sequentially to the rake surface 5 of each saw tooth.

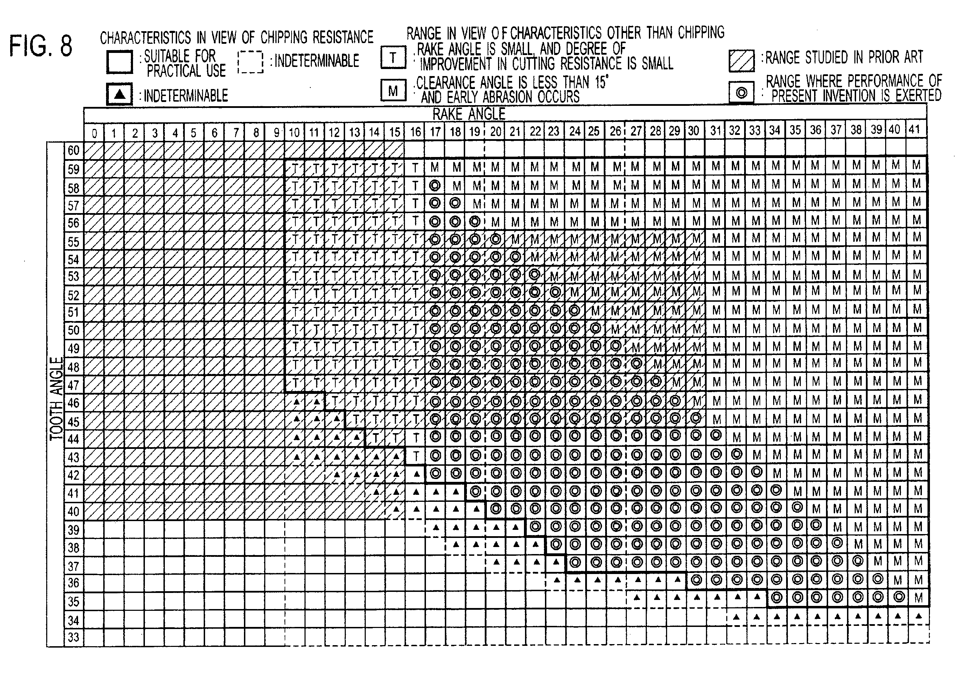

As described above, it is found out that the larger rake angle θ of the saw teeth is preferred in light of the cutting resistance. Now, since the sum of the rake angle 8, the clearance angle α, and the tooth angle β of the saw teeth is 90°, band saw blades are produced in order to check chipping resistance and abrasion resistance of the saw blades by using tooth point configurations to change the rake angle θ of the saw teeth on the saw blades 1 by every one degree in a range from 10° to 41° and to change the tooth angle β thereof by every one degree in a range from 33° to 59°, and setting the radius r of the chip curler portion 7 in a range within 10% ± 4% of the average saw tooth pitch, the fan angle φ in a range within 85° ± 20°, and the height dimension h in a range within (2r×1.1) ± 0.2(2r×1.1). Results of cutting the work under the same conditions as the above-described cutting conditions are shown in Fig. 8.

In Fig. 8, a range surrounded by a thick solid line shows fine chipping resistance whereas a range surrounded by a dashed line causes early chipping. Specifically, early chipping is more likely to occur when the rake angle θ becomes smaller and the tooth angle β becomes smaller. Meanwhile, a range indicated with ▲ in Fig. 8 is an intermediate range between the range showing the chipping resistance and the range where early chipping easily occurs. This range is a vague range and is therefore determined to be an impractical range because the chipping resistance is occasionally observed or early chipping is occasionally observed.

Within the range having the fine chipping resistance, an examination is made on a range where the cutting resistance can be reduced 10% or more than the cutting resistance of the conventional band saw blade 1C by increasing the rake angle θ in order to achieve high-speed cutting. A range indicated with T in Fig. 8 shows an undesirable range in which the degree of reduction in the cutting resistance is 10% or less. Accordingly, it is obvious that the rake angle θ is preferably 17° or more.

Next, an examination is made on the abrasion resistance of the saw teeth. When the clearance angle α is calculated based on the clearance angle α= 90° - (the rake angle θ + the tooth angle β), a range where the clearance angle α is 14° or less, specifically a range indicated with M in Fig. 8 represents the range where early abrasion easily occurs. That is to say, the clearance angle α is desirably 15° or more for the abrasion resistance.

In Fig. 8, a range indicated with double circles is a range where an improvement in the chipping resistance, a reduction effect in the cutting resistance and an improvement in the abrasion resistance are found out. This range is defined as $17° \leq θ \leq 40°$ for the rake angle θ and $35° \leq β \leq 58°$ for the tooth angle β. Meanwhile, the clearance angle α is in a range equal to or more than 15°, i.e., a range where the rake angle θ + the tooth angle β + the clearance angle α= 90° is kept.

As already understood, the improvements in the chipping resistance and the abrasion resistance of the saw teeth and the reduction effect in the cutting resistance are achieved due to as follows: the saw teeth are in the range being defined by the rake angle θ in a range from 17° to 40°, the tooth angle β in a range from 35° to 58°, and the clearance angle α equal to or more than 15° while keeping the rake angle θ + the tooth angle β + the clearance angle α= 90°; the radius r of the chip curler portion 7 provided on each saw tooth is in a range within 10% ± 4% of either the saw tooth pitch P or the average saw tooth pitch; the fan angle φ is in a range within 85° ± 20°; and the height dimension h is in a range within (2r×1.1) ± 0.2(2rx 1.1). Here, cutting can be performed while coarseness of the cut surface of the work is suppressed without occurrence of clogging in the chip curler portions 7, and the aforementioned problems of the related art can be solved.

As understood from the description above, it is found out that the chipping resistance, the cutting resistance, and the abrasion resistance are respectively related to the tooth angle, the rake angle, and the clearance angle of the saw teeth when cutting the work with the band saw blade, that clogging caused by the chips inside the gullet is related to the presence or absence of the chip curler portion for curling the chips, and that the radius and the fan angle of the chip curler portion and the height position thereof from the tooth point are related to the saw tooth pitches. Hence, by defining the three factors of the tooth angle, the rake angle, and the clearance angle as well as the radius, the fan angle, and the height position from the tooth point of the chip curler portion as described above, it is possible to achieve the improvement in the chipping resistance, the reduction in the cutting resistance, and the improvement in the abrasion resistance and to efficiently prevent the gullets from being clogged with the chips. In this way, it is possible to solve the above-mentioned problems of the related art.

Here, hard coating is desirably performed by use of a nitride, a carbide, or an oxide, for example, in order to further improve the abrasion resistance of the saw teeth.

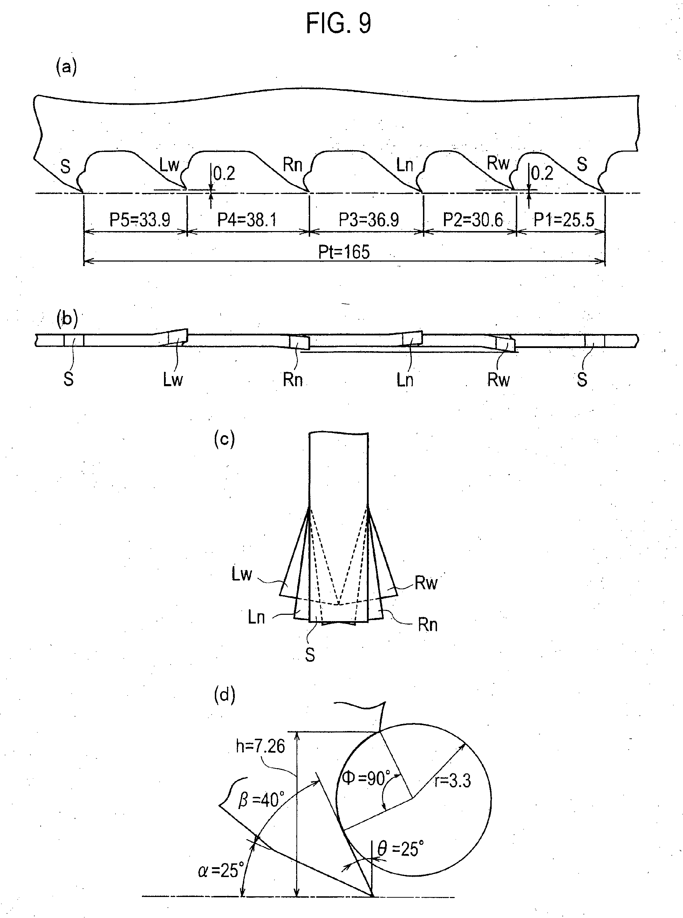

Fig. 9 shows a band saw blade according to a second embodiment. This band saw blade includes right and left set teeth Rw and Lw having lower tooth height dimensions than those of right and left set teeth Rn and Ln, and setting amounts of these lower right and left set teeth Rw and Lw are greater than setting amounts of the right and left set teeth Rn and Ln having the higher tooth height dimensions. Moreover, the pitches P1 to P5 between the respective saw teeth, the rake angle θ, the clearance angle α, and the tooth angle β of each saw tooth, the radius r of the chip curler portion, the fan angle φ thereof, and the height dimension h are set up as shown in Fig. 9. This band saw blade can exert similar effects to those of the above-described band saw blade.

## Claims

1. A saw blade comprising:

a plurality of saw teeth each including a rake surface, a rake angle θ, a tooth angle β, and a clearance angle α, wherein

$$17° \leq \theta \leq 40°, \, 35° \leq \beta \leq 58°, \, \text{and} \, 15° < \alpha,$$

$17° \leq \theta \leq 40°$, $35° \leq \beta \leq 58°$, and $15° < \alpha$,
a sum of the rake angle θ, the tooth angle β, and the clearance angle α is 90°,
a radius r of an arc-shaped chip curler portion being in contact with the rake surface of each of the saw teeth is in a range within 10% ± 4% of any of a saw tooth pitch and an average saw tooth pitch of the saw blade,
a fan angle φ of the chip curler portion is in a range within 85° ± 20°, and
a dimension h from an intersection portion of the chip curler portion and a gullet forming surface extending from a tooth bottom side of each of the saw teeth, to a tooth point of each of the saw teeth is in a range within (2r×1.1) ± 0.2(2r×1.1).

2. The saw blade according to claim 1, wherein
the plurality of saw teeth provided on the saw blade have a difference in height.

3. The saw blade according to claim 1, wherein
the tooth points of the saw teeth are coated with hard coating.

4. The saw blade according to claim 1, wherein
the saw teeth are kept in a state just after a tooth cutting process.

5. A method of manufacturing a saw blade, comprising the steps of:

performing a tooth cutting process of saw teeth, each of the saw teeth satisfying $17° \leq \theta \leq 40°$, $35° \leq \beta \leq 58°$, $15° < \alpha$, and $\theta+\beta+\alpha= 90°$ where θ is a rake angle, β is a tooth angle, and α is a clearance angle, a radius r of an arc-shaped chip curler portion in contact with a rake surface of each of the saw teeth being in a range within 10% ± 4% of any of a saw tooth pitch and an average saw tooth pitch of the saw blade, a fan angle φ of the chip curler portion being in a range within 85° ± 20°, and a dimension h from an intersection portion of the chip curler portion and a gullet forming surface extending from a tooth bottom side of each of the saw teeth, to a tooth point of each of the saw teeth being in a range within (2r×1.1) ± 0.2(2r×1.1), and
setting right and left set teeth while keeping the rake angle θ, the tooth angle β, and the clearance angle α unchanged.

## Patentansprüche

1. Sägeblatt, das umfasst:

eine Vielzahl von Sägezähnen, die jeweils eine Spanfläche, einen Spanwinkel θ, einen Zahnwinkel β und einen Freiwinkel α aufweisen, wobei

$$17° \leq \theta \leq 40°, \, 35° \leq \beta \leq 58°, \, \text{und} \, 15° < \alpha,$$

die Summe aus dem Spanwinkel θ, dem Zahnwinkel β und dem Freiwinkel α gleich 90° ist,
der Radius r eines bogenförmigen Spanwicklerteils in Kontakt mit der Spanfläche jedes der Sägezähne im Bereich von 10% ± 4% eines Sägezahnabstands oder eines durchschnittlichen Sägezahnabstands des Säge- blatts liegt,
der Fächerwinkel φ des Spanwicklerteils im Bereich von 85° ± 20° liegt, und

die Dimension h von einem Kreuzungsteil des Spanwicklerteils und einer eine Rinne bildenden Fläche, die sich von einer Zahnbodenseite jedes der Sägezähne erstreckt, zu einer Zahnspitze jedes der Sägezähne im Bereich von $(2r \times 1{,}1) \pm 0{,}2\,(2r \times 1{,}1)$ liegt.

2. Sägeblatt nach Anspruch 1, wobei:

die Vielzahl von Sägezähnen an dem Sägeblatt eine Differenz in der Höhe aufweisen.

3. Sägeblatt nach Anspruch 1, wobei:

die Zahnspitzen der Sägezähne mit einer harten Beschichtung beschichtet sind.

4. Sägeblatt nach Anspruch 1, wobei:

die Sägezähne in einem Zustand direkt nach einem Zahnschneideprozess gelassen werden.

5. Verfahren zur Herstellung eines Sägeblatts, das die folgenden Schritte umfasst:

Durchführen eines Zahnschneideprozesses für Sägezähne, wobei jeder der Sägezähne $17° \le \theta \le 40°$, $35° \le \beta \le 58°$ und $15° < \alpha$ sowie $\theta + \beta + \alpha = 90°$ erfüllt, wobei $\theta$ ein Spanwinkel ist, $\beta$ ein Zahnwinkel ist und $\alpha$ ein Freiwinkel ist, wobei der Radius r eines bogenförmigen Spanwicklerteils in Kontakt mit einer Spanfläche jedes der Sägezähne im Bereich von $10\% \pm 4\%$ eines Sägezahnabstands oder eines durchschnittlichen Sägezahnabstands des Sägeblatts liegt, der Fächerwinkel $\varphi$ des Spanwicklerteils im Bereich von $85° \pm 20°$ liegt, und wobei die Dimension h von einem Kreuzungsteil des Spanwicklerteils und einer eine Rinne bildenden Fläche, die sich von einer Zahnbodenseite jedes der Sägezähne erstreckt, zu einer Zahnspitze jedes der Sägezähne im Bereich von $(2r \times 1{,}1) \pm 0{,}2\,(2r \times 1{,}1)$ liegt, und
Setzen von rechts und links gesetzten Zähnen, wobei der Spanwinkel $\theta$, der Zahnwinkel $\beta$ und der Freiwinkel $\alpha$ unverändert bleiben.

**Revendications**

1. Lame de scie comprenant :

une pluralité de dents de scie incluant chacune une surface de coupe, un angle de coupe $\theta$, un angle de dent $\beta$ et un angle de dépouille $\alpha$, dans laquelle

$$17° \le \theta \le 40°,\ 35° \le \beta \le 58°\ \text{et}\ 15° < \alpha,$$

la somme de l'angle de coupe $\theta$, de l'angle de dent
$\beta$ et de l'angle de dépouille $\alpha$ est égale à 90°,
le rayon r d'une portion en forme d'arc pour recourber les copeaux étant en contact avec la surface de coupe de chacune des dents de scie se situe dans la plage de $10\ \% \pm 4\ \%$ de l'un quelconque parmi le pas des dents de scie et le pas moyen des dents de scie de la lame de scie,
l'angle de dispersion $\phi$ de la portion pour recourber les copeaux se situe dans la plage de $85° \pm 20°$, et
la dimension h depuis une portion d'intersection de la portion pour recourber les copeaux et un creux formant la surface s'étendant du côté de fond des dents de chacune des dents de scie, jusqu'à une pointe de dent de chacune des dents de scie se situe dans la plage de $(2r \times 1{,}1) \pm 0{,}2(2r \times 1{,}1)$.

2. Lame de scie selon la revendication 1, dans laquelle
la pluralité de dents de scie prévues sur la lame de scie présentent une différence de hauteur.

3. Lame de scie selon la revendication 1, dans laquelle
les pointes de dent des dents de scie sont recouvertes d'un revêtement dur.

4. Lame de scie selon la revendication 1, dans laquelle

les dents de scie sont maintenues dans un état qui suit immédiatement un processus de découpe de dents.

5. Procédé de fabrication d'une lame de scie, comprenant les étapes consistant à :

exécuter un processus de découpe de dents de dents de scie, chacune des dents de scie satisfaisant à 17° ≤ θ ≤ 40°, 35° ≤ β ≤ 58°, 15° < α et θ + β + α = 90°, où θ es l'angle de coupe, β est l'angle de dent et α est un angle de dépouille, le rayon r d'une portion en forme d'arc pour recourber les copeaux en contact avec la surface de coupe de chacune des dents de scie se situant dans la plage de 10 % ± 4 % de l'un quelconque parmi le pas des dents de scie et le pas moyen des dents de scie de la lame de scie, l'angle de dispersion φ de la portion pour recourber les copeaux se situant dans la plage de 85° ± 20°, et la dimension h depuis une portion d'intersection de la portion pour recourber les copeaux et un creux formant la surface s'étendant du côté de fond des dents de chacune des dents de scie, jusqu'à une pointe de dent de chacune des dents de scie se situant dans la plage de (2r x 1, 1) ± 0, 2 (2r x 1, 1), et

fixer les dents de droite et de gauche en maintenant l'angle de coupe θ, l'angle de dent β et l'angle de dépouille α inchangés.

# FIG. 1

(a)

(b)

(c)

(d)

# FIG. 2

(a)

S    L2    R2    L1    R1    S

P5=11.3 | P4=12.7 | P3=12.3 | P2=10.2 | P1=8.5

Pt=55.0

(b)

S    L2    R2    L1    R1    S

(c)

(d)

$\beta=36°$

$\alpha=24°$

$r=1.1$

$\Phi=90°$

h=2.42    $\theta=30°$

# FIG. 3

# FIG. 4

## FIG. 5

## FIG. 6

# FIG. 7

(a)

(b)

FIG. 8

CHARACTERISTICS IN VIEW OF CHIPPING RESISTANCE

☐ : SUITABLE FOR PRACTICAL USE    ⌐ ⌐ : INDETERMINABLE

▲ : INDETERMINABLE

RANGE IN VIEW OF CHARACTERISTICS OTHER THAN CHIPPING

T : RAKE ANGLE IS SMALL, AND DEGREE OF IMPROVEMENT IN CUTTING RESISTANCE IS SMALL

M : CLEARANCE ANGLE IS LESS THAN 15° AND EARLY ABRASION OCCURS

▨ : RANGE STUDIED IN PRIOR ART

◎ : RANGE WHERE PERFORMANCE OF PRESENT INVENTION IS EXERTED

# FIG. 9

(a)

S  Lw  0.2  Rn  Ln  Rw  0.2  S

| P5=33.9 | P4=38.1 | P3=36.9 | P2=30.6 | P1=25.5 |

Pt=165

(b)

S  Lw  Rn  Ln  Rw  S

(c)

Lw  Rw
Ln  Rn
S

(d)

h=7.26  Φ=90°  r=3.3
β=40°
α=25°  θ=25°

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P4292871 A
- JP HEI81996174334 B
- JP 2005118949 A
- JP 2005349512 A
- US P5018421 A
- JP HEI61994716 B
- JP HEI11199919821 B
- JP HEI111999147201 B
- JP HEI11199928615 B
- JP 3870158 B